# NEUE EUROPÄISCHE PATENTSCHRIFT

(11) **EP 2 865 511 B2**
(45) Veröffentlichungstag und Bekanntmachung des Hinweises auf die Entscheidung über den Einspruch: **06.06.2018**
(45) Hinweis auf die Patenterteilung: 23.12.2015
(21) Anmeldenummer: 13190267.8
(22) Anmeldetag: 25.10.2013
(51) Int. Cl.: B29C 47/16, B29C 47/92, B29C 47/08

(54) **Düse und Verfahren zur Platten- oder Folienextrusion**
Extrusion die and process for plate or film extrusion
Buse et procédé pour l'extrusion de plaques ou de feuilles

(43) Veröffentlichungstag der Anmeldung: 29.04.2015
(73) Patentinhaber: Magna Steyr Fuel Systems GesmbH, 8261 Sinabelkirchen (AT)
(72) Erfinder: Pozgainer, Günther, 8045 Graz (AT); Palvoelgyi, Sandor, 8200 Gleisdorf (AT)
(74) Vertreter: Zangger, Bernd

(56) Entgegenhaltungen:
- WO-A1-93/06985
- DE-A1-102007 030 369
- DE-A1-102010 010 872
- DE-C1- 19 535 930
- DE-U1-202007 008 132
- JP-A- S5 497 663
- JP-A- S54 153 877
- JP-A- 2001 009 817
- Breitschlitz-Extrusionswerkzeuge, Technische Information der Reifenhäuser-Gruppe

## Beschreibung

### Gebiet der Erfindung

Die Erfindung betrifft ein Verfahren zur Herstellung eines Bauteils aus härtbarem Material mittels einer Düse zur Platten- oder Folienextrusion.

### Stand der Technik

Düsen zur Platten- oder Folienextrusion von Kunststoff und anderen plastifizierbaren und härtbaren Materialien sind an sich bekannt. Das Material wird üblicherweise zunächst erwärmt und in plastischem Zustand durch die Düse, zwischen einem Düsenunterteil und einem Düsenoberteil, gedrückt, um, nach einer Abkühlungs- und Erhärtungsphase, eine Platte zu erhalten die möglichst genau vorgegebenen Dimensionen entspricht.

Bekannt ist auch, beispielsweise aus US 4,454,084 oder DE 198 55 751 A1, dass die Dicke der Düse, also der Abstand zwischen einem Düsenunterteil und einem Düsenoberteil vor einer Extrusion feineingestellt werden kann, um vorgegebene Dickentoleranzen einzuhalten.

Düsen zur Platten- oder Folienextrusion mit einstellbarer Düsendicke sind auch bekannt aus DE 10 2007 030369 A1, DE 195 35 930 C1, JP 54153877 A, JP 54 97663 A, JP 2001 009817 A und DE 20 2007 008132 U1.

Bekannt ist ferner die Verarbeitung von Kunststoffplatten durch Thermoformen, bei dem üblicherweise thermoplastische Kunststoffe in erwärmtem Zustand umgeformt werden, beispielsweise in Vakuum tiefgezogen werden.

Es ist eine Aufgabe der Erfindung, ein geeignetes Verfahren zur Herstellung eines Bauteils aus härtbarem Material mittels einer Düse anzugeben, so dass eine größere Bandbreite verschiedener Platten oder Folien durch Extrusion hergestellt werden kann und insbesondere die hergestellten Platten bzw. Folien besser zur Verarbeitung mittels weiterer Umformungsprozesse wie Thermoformen geeignet sind.

Die Lösung der Aufgabe erfolgt durch ein Verfahren nach Anspruch 1. Das Verfahren verwendet eine Düse zur Platten- oder Folienextrusion eines härtbaren Materials, umfassend ein Düsenunterteil und ein Düsenoberteil sowie mehrere Verstellbolzen und eine Düsen-Steuerungseinheit, wobei sich entlang der Unterkante des Düsenoberteils ein flexibles Element erstreckt, wobei der Abstand des flexiblen Elements vom Düsenunterteil in mehreren Abschnitten durch die mehreren Verstellbolzen von der Düsen-Steuerungseinheit während der Extrusion einstellbar ist, wobei seitlich an der Düse jeweils ein Schieber unterhalb des flexiblen Elements zur Breiteneinstellung der Düse angeordnet ist, wobei seitliche Verstellbolzen das flexible Element dauerhaft auf die Schieber drücken.

### Zusammenfassung der Erfindung

Erfindungsgemäß ist ein flexibles Element an der Unterkante des Düsenoberteils angeordnet, dessen Abstand zum Düsenunterteil den Spalt der Düse bestimmt. Das flexible Element stellt eine flexible Lippe der Düse dar, die sich zumindest über einen wesentlichen Teil der Breite der Düse erstreckt, bevorzugt über die gesamte zur Extrusion nutzbare Breite der Düse. In mehreren Abschnitten entlang dieser Erstreckung des flexiblen Elementes ist dieses mittels der Bolzen während des Extrusionsvorganges näher an den Düsenunterteil drückbar und/oder vom Düsenunterteil entfernbar. Dadurch wird erreicht dass die Dicke einer Platte bzw. Folie die mit der Düse hergestellt wird, entlang deren Längsrichtung, also der Extrusionsrichtung, variieren kann. Zusätzlich kann durch die abschnittsweise Wirkung des Verstellbolzens auf das flexible Element die Dicke der Platte bzw. Folie auch in der Querrichtung, normal zur Extrusionsrichtung, variieren.

Die Düsen-Steuerungseinheit ist erfindungsgemäß so eingerichtet, dass ein Verstellen der Verstellbolzen während einer Extrusion möglich ist.

Erfindungsgemäß umfasst die Düse mehrere Verstellbolzen die auf das selbe flexible Element wirken, so dass der Abstand des flexiblen Elements vom Düsenunterteil in mehreren Abschnitten durch die mehreren Verstellbolzen von der Düsen-Steuerungseinheit während der Extrusion einstellbar ist. Dadurch kann auch quer zur Extrusionsrichtung die Dicke der hergestellten Platte in verschiedenen Abschnitten unterschiedlich eingestellt werden. Auch kann hierdurch ein annähernd homogener Druck entlang der Querrichtung auf das flexible Element ausgeübt werden.

Erfindungsgemäß ist seitlich an der Düse, also links und rechts, jeweils ein Schieber unterhalb des flexiblen Elements zur Breiteneinstellung der Düse angeordnet. Hierdurch kann die Breite der hergestellten Platten vor der Extrusion oder auch während der Extrusion variiert werden. Die seitlichen Schieber werden bevorzugt ebenfalls durch die Düsen-Steuerungseinheit angesteuert.

Erfindungsgemäß drücken seitliche Verstellbolzen das flexible Element dauerhaft auf die Schieber, und sorgen hierdurch im Seitenbereich für eine Abdichtung zwischen flexiblem Element und Düsenunterteil. Lediglich die mittigen Verstellbolzen können dann tatsächlich während der Extrusion verstellt werden.

Weiterbildungen der Erfindung sind in den abhängigen Ansprüchen, der Beschreibung sowie den beigefügten Zeichnungen angegeben.

Bevorzugt ist der Abstand zwischen dem flexiblen Element und dem Düsenunterteil von der Düsen-Steuerungseinheit während der Extrusion um mindestens 0.5 mm, bevorzugt mindestens 1 mm, besonders bevorzugt mindestens 2 mm verstellbar. Die angegebenen Abstände beziehen sich auf die Unterkante des flexiblen Elements und die Oberkante der unteren Düsenhälfte. Hierdurch ist eine deutliche Änderung der Dicke der hergestellten Platten während der Extrusion erzielbar.

Ein erfindungsgemäßes Verfahren zur Herstellung eines Bauteils aus härtbarem Material verwendet eine erfindungsgemäße Düse, wobei während der Extrusion von der Düsen-Steuerungseinheit die Dicke des Bauteils in Längsrichtung und/oder in Querrichtung variiert wird, indem während der Extrusion der Abstand des flexiblen Elements vom Düsenunterteil zumindest abschnittsweise durch den mindestens einen Verstellbolzen von der Düsen-Steuerungseinheit verändert wird. Erfindungsgemäß wird von der Düsen-Steuerungseinheit der Abstand des flexiblen Elements vom Düsenunterteil zweidimensional, nämlich abhängig von der Position in Querrichtung und von der Zeit, variiert.

Erfindungsgemäß wird von der Düsen-Steuerungseinheit zur Herstellung des Bauteils der Abstand des flexiblen Elements vom Düsenunterteil gemäß einer ersten zweidimensionalen Funktion variiert und von der Düsen-Steuerungseinheit zur Herstellung eines weiteren Bauteils der Abstand des flexiblen Elements vom Düsenunterteil gemäß einer von der ersten zweidimensionalen Funktionen verschiedenen zweiten zweidimensionalen Funktion variiert. Hierdurch können insbesondere zwei aufeinander abgestimmte Bauteile mit einer einzigen Düse und Düsen-Steuerungseinheit hergestellt werden.

Das Bauteil und das weitere Bauteil werden erfindungsgemäß an deren Umfängen miteinander verschweißt, um gemeinsam einen Behälter zu bilden. Das Bauteil und das weitere Bauteil bilden in diesem Fall eine Unterschale und eine Oberschale insbesondere für einen Kunststoffbehälter.

Dazu sind bevorzugt die erste zweidimensionale Funktion und die zweite zweidimensionale Funktion derart miteinander verknüpft, dass die Umfänge der beiden Bauteile aufeinander passen, um gut miteinander verschweißbar zu sein. Die Verknüpfung der beiden zweidimensionalen Funktionen kann als Tensor dargestellt werden.

Bevorzugt wird vor der Herstellung des Bauteils und des weiteren Bauteils eine Verknüpfung zwischen der ersten zweidimensionalen Funktion und der zweiten zweidimensionalen Funktion, insbesondere ein Tensor, an der Düsen-Steuerungseinheit konfiguriert.

Besonders gut anwendbar ist das erfindungsgemäße Verfahren wenn nach der Extrusion des Bauteils dieser thermogeformt wird, wobei insbesondere die nach der Extrusion dickeren Bereiche beim Thermoformen stärker ausgedünnt werden. Dabei können durch die Dickenvariationen bei der Extrusion die unterschiedlichen Dickenveränderungen durch zum Beispiel unterschiedlich starkes tiefziehen kompensiert werden.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Ansicht einer erfindungsgemäßen Düse.
- Fig. 2: ist eine schematische, ausschnittsweise Darstellung des Querschnitts einer Düse gemäß Fig. 1 von der Seite.
- Fig. 3, 4: sind schematische Darstellungen eines Düsenunterteils mit seitlichen Schiebern.
- Fig. 5: ist eine schematische Darstellung des elastischen Elements mit Verstellbolzen ohne Düsenoberteil von oben.
- Fig. 6, 7: sind schematische Darstellungen des Düsenoberteils ohne (Fig. 6) und mit (Fig. 7) eingesetztem elastischen Element.
- Fig. 8: zeigt eine extrudierte Platte in einem Koordinatensystem X, Y

### Detaillierte Beschreibung der Erfindung

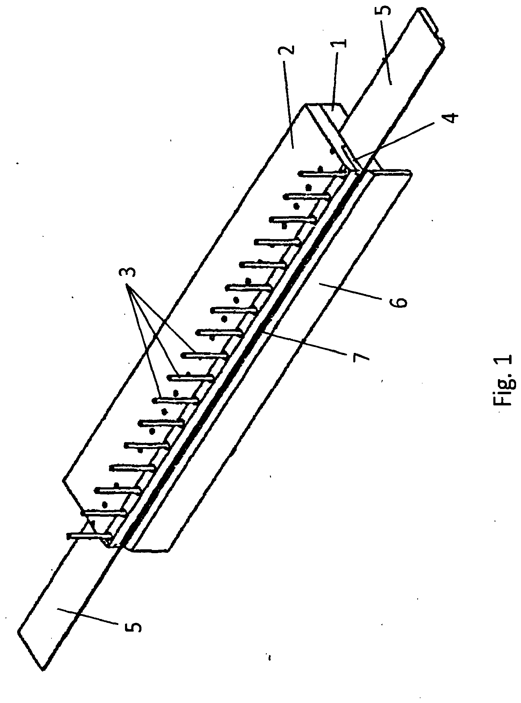

In Fig. 1 ist eine erfindungsgemäße Düse zur Platten- oder Folienextrusion eines härtbaren Materials dargestellt, mit einem Düsenunterteil 1 und einem Düsenoberteil 2. Entlang der Unterkante des Düsenoberteils 2 erstreckt sich ein flexibles Element 4, das eine flexible Lippe bildet so dass sich zwischen flexiblem Element 4 und Düsenunterteil 1 ein Düsenaustritt 7 bildet. Vor dem Düsenaustritt 7 ist ein Sperrschieber 6 angebracht mittels dessen eine extrudierte Platte abgeschnitten werden kann. Mehrere Verstellbolzen 3 sind von oben durch das Düsenoberteil 2 geführt und mit dem flexiblen Element 4 verbunden. Die Verstellbolzen 3 sind über eine nicht dargestellte Düsen-Steuerungseinheit aktuierbar. Bei Bewegung der Verstellbolzen 3 nach oben oder nach unten wird das flexible Element in einem dem jeweiligen Verstellbolzen 3 benachbarten Abschnitt ebenfalls nach oben bzw. unten verstellt, so dass sich der Abstand zwischen flexiblem Element 4 und Düsenunterteil 1 zumindest in diesem Abschnitt verändert. Aktuatoren für die Verstellbolzen, Schieber und Sperrschieber sind in den Figuren zur besseren Übersichtlichkeit nicht dargestellt.

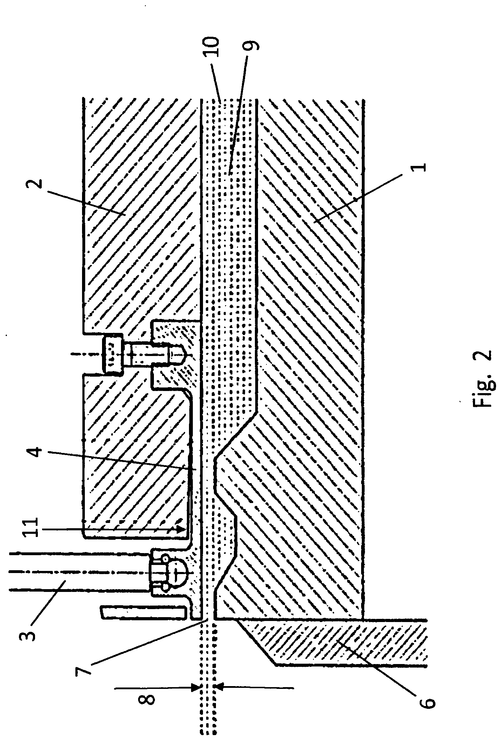

Fig. 2 ist eine Darstellung des Querschnitts einer Düse gemäß Fig. 1. Die Schmelze 9, insbesondere geschmolzener Kunststoff, tritt hinten durch einen Düseneintrittskanal 10 in die Düse ein und wird durch eine Kanal gedrückt der zunächst zwischen Düsenoberteil 2 und Düsenunterteil 1 gebildet wird. Das Düsenunterteil 1 ist strömungstechnisch optimiert geformt. Auf der vorderen, dem Düsenaustritt 7 zugewandten Seite der Düse ist am Düsenoberteil 2 das elastische Element 4 befestigt. Das elastische Element 4 hat zwischen dem Düsenoberteil 2 und dem Düsenunterteil 1 einen Bewegungsfreiraum 11. Durch ein Rundloch im Düsenoberteil 2 ist ein Verstellbolzen 3 geführt und am elastischen Element 4 derart befestigt, dass sowohl eine Kraft nach oben als auch nach unten auf das elastische Element 4 übertragen werden kann. Das elastische Element 4 bleibt auch bei Deformation elastisch. Die Schmelze 9 tritt schließlich an einem Düsenaustritt 7 in einer gewünschten Dicke 8, die vom Abstand zwischen Düsenunterteil 1 und elastischem Element 4 bestimmt wird, aus der Düse aus. Am Düsenaustritt 7 ist auch der Sperrschieber 6 vertikal beweglich.

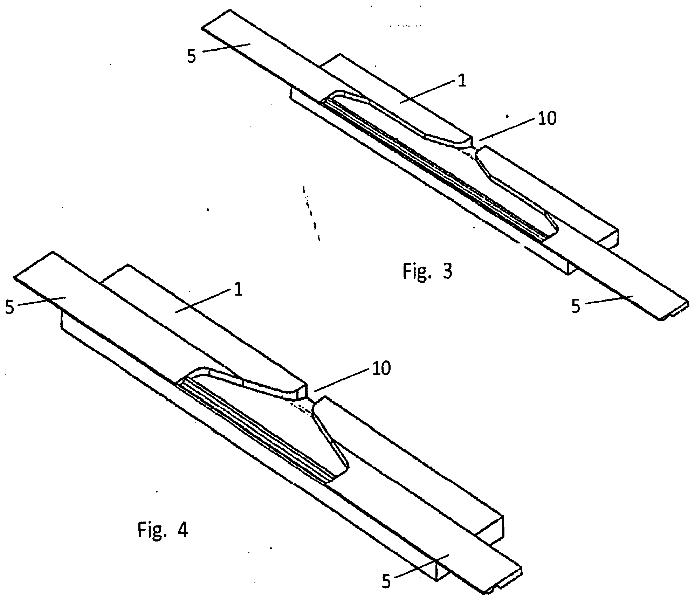

Fig. 3 und 4 sind jeweils Darstellungen eines Düsenunterteils 1 mit jeweils zwei seitlichen Schiebern 5. Die Schieber 5 sind in Fig. 3 so breit wie möglich eingestellt, in Fig. 4 so schmal wie möglich. Die Schieber 5 sind genau in den Düsenunterteil 1 eingepasst, so dass Schmelze nicht zwischen Düsenunterteil 1 und Schieber 5 austreten kann.

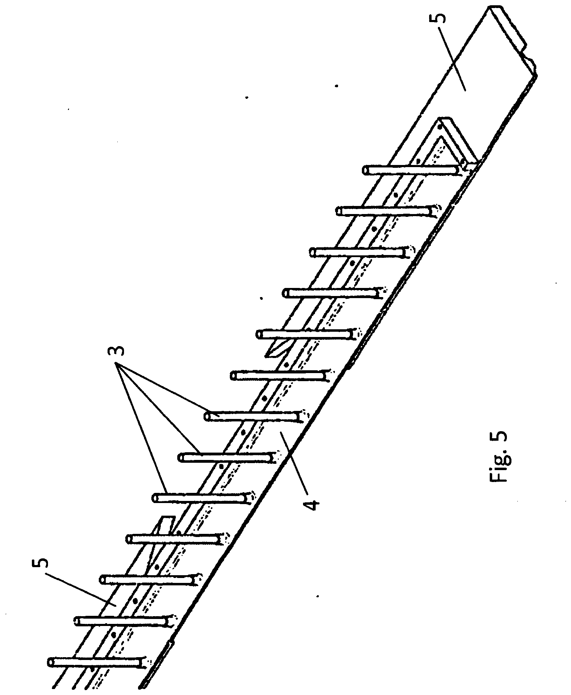

Fig. 5 ist eine Darstellung des elastischen Elements 4 auf den zusammengeschobenen Schiebern 5 von oben. Das Düsenoberteil ist hier nicht dargestellt. Im Betrieb pressen die über den Schiebern 5 angeordneten seitlichen Verstellbolzen 3 das elastische Element 4 konstant gegen die Schieber 5 um dort Dichtheit zu erzeugen. Die übrigen, mittigen Verstellbolzen 3 können die Dicke der extrudierten Platten steuern.

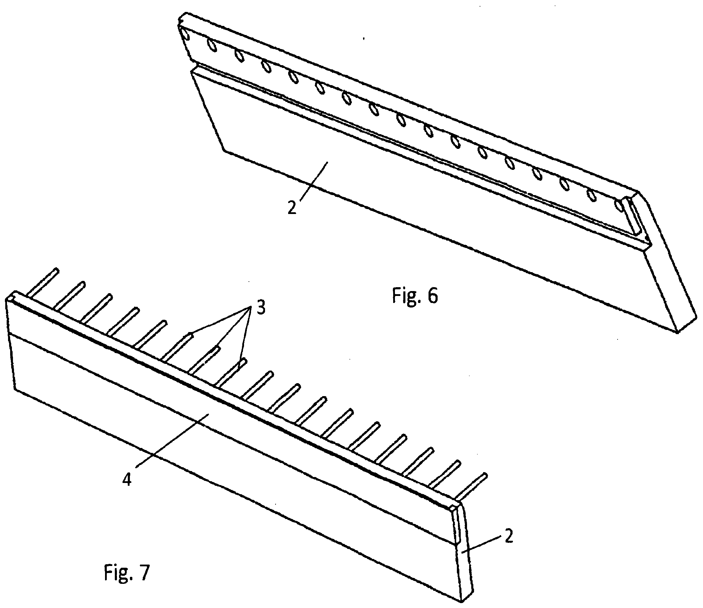

Fig. 6 zeigt das Düsenoberteil von unten, mit einem Nest zum Einsetzen eines elastischen Elements. Fig. 7 zeigt die selbe Ansicht wie Fig. 6, jedoch mit eingesetztem elastischem Element 4 und mit Verstellbolzen 3.

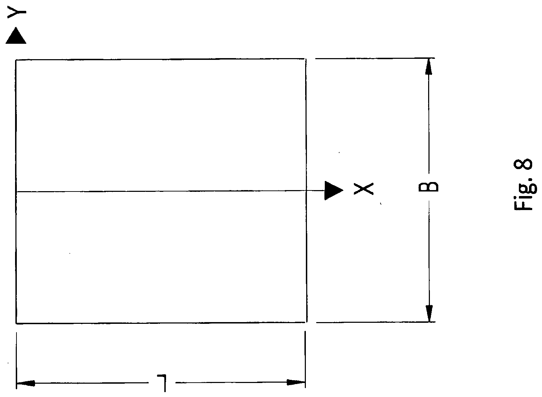

In Fig. 8 ist eine extrudierte Platte mit einem Koordinatensystem X, Y dargestellt um das zweidimensionale Verfahren zur Herstellung eines Bauteils näher zu erläutern. Das dargestellte Bauteil hat entlang der Extrusionsrichtung X eine Länge L und in der Querrichtung X dazu die Breite B. Die lokale Dicke des Bauteils an einer Position x,y ist durch eine zweidimensionale, stetige Funktion d(x,y) = d₀+z(x,y) gegeben, wobei d₀ eine nominelle Dicke darstellt und z(x,y) die Dickenänderungen als zweidimensionale Funktion darstellt. Bei einer Extrusionsgeschwindigkeit v ergibt sich für eine Position an der Extrusionslänge L abhängig von der Zeit t als Dickenänderungsfunktion am elastischen Element z₀(t, y) = z(L-v*t, y). Diese Dickenänderungsfunktion ist an der Düsen-Steuerungseinheit vorzugsweise konfigurierbar. Bei der Herstellung eines Behälters aus zwei extrudierten Platten die anschließend an deren Umfang miteinander verschweißt werden können beide Platten verschiedene Dickenfunktionen erfüllen, also di(x,y) = d₁₀ + z₁(x,y) und d₂(x,y) = d₂₀ + z₂(x,y).

### Bezugszeichenliste

- 1: Düsenunterteil
- 2: Düsenoberteil
- 3: Verstellbolzen
- 4: flexibles Element
- 5: Schieber
- 6: Sperrschieber
- 7: Düsenaustritt
- 8: Dicke
- 9: Schmelze
- 10: Düseneintrittskanal
- 11: Bewegungsfreiraum

- L: Länge
- B: Breite
- X: X Achse
- Y: Y Achse

## Patentansprüche

1. Verfahren zur Herstellung eines Bauteils aus härtbarem Material mittels einer Düse zur Platten- oder Folienextrusion eines härtbaren Materials, umfassend ein Düsenunterteil (1) und ein Düsenoberteil (2) sowie mehrere Verstellbolzen (3) und eine Düsen-Steuerungseinheit, wobei sich entlang der Unterkante des Düsenoberteils (2) ein flexibles Element (4) erstreckt, wobei der Abstand des flexiblen Elements (4) vom Düsenunterteil (1) in mehreren Abschnitten durch die mehreren Verstellbolzen (3) von der Düsen-Steuerungseinheit während der Extrusion einstellbar ist, wobei seitlich an der Düse jeweils ein Schieber (5) unterhalb des flexiblen Elements (4) zur Breiteneinstellung der Düse angeordnet ist, wobei seitliche Verstellbolzen (3) das flexible Element (4) dauerhaft auf die Schieber (5) drücken,
wobei während der Extrusion von der Düsen-Steuerungseinheit die Dicke des Bauteils in Längsrichtung und/oder in Querrichtung variiert wird, wobei von der Düsen-Steuerungseinheit der Abstand des flexiblen Elements (4) vom Düsenunterteil (1) zweidimensional, nämlich abhängig von der Position in Querrichtung und von der Zeit, variiert wird, wobei von der Düsen-Steuerungseinheit zur Herstellung des Bauteils der Abstand des flexiblen Elements (4) vom Düsenunterteil (1) gemäß einer ersten zweidimensionalen Funktion variiert wird und von der Düsen-Steuerungseinheit zur Herstellung eines weiteren Bauteils der Abstand des flexiblen Elements (4) vom Düsenunterteil (1) gemäß einer von der ersten zweidimensionalen Funktionen verschiedenen zweiten zweidimensionalen Funktion variiert wird, wobei das Bauteil und das weitere Bauteil an deren Umfängen verschweißt werden, um gemeinsam einen Behälter zu bilden.

2. Verfahren nach Anspruch 1,
**dadurch gekennzeichnet, dass** die erste zweidimensionale Funktion und die zweite zweidimensionale Funktion derart miteinander verknüpft sind, dass die Umfänge der beiden Bauteile aufeinander passen.

3. Verfahren nach zumindest einem der Ansprüche 1 bis 2,
**dadurch gekennzeichnet, dass** vor der Herstellung des Bauteils und des weiteren Bauteils eine Verknüpfung zwischen der ersten zweidimensionalen Funktion und der zweiten zweidimensionalen Funktion an der Düsen-Steuerungseinheit konfiguriert wird.

4. Verfahren nach zumindest einem der Ansprüche 1 bis 3,
**dadurch gekennzeichnet, dass** nach der Extrusion des Bauteils dieser thermogeformt wird, wobei insbesondere die nach der Extrusion dickeren Bereiche des Bauteils beim Thermoformen stärker ausgedünnt werden.

5. Verfahren nach Anspruch 1,
**dadurch gekennzeichnet, dass** der Abstand zwischen dem flexiblen Element (4) und dem Düsenunterteil (1) von der Düsen-Steuerungseinheit während der Extrusion um mindestens 0.5 mm, bevorzugt mindestens 1 mm, besonders bevorzugt mindestens 2 mm verstellbar ist.

## Claims

1. Method for producing a structural part from hardenable material by means of a die for the board or film extrusion of a hardenable material, comprising a die bottom part (1) and a die top part (2) and also a plurality of adjusting bolts (3) and a die control unit, wherein a flexible element (4) extends along the lower edge of the die top part (2), wherein the distance between the flexible element (4) and the die bottom part (1) can be adjusted in a plurality of segments during extrusion by the die control unit by means of the plurality of adjusting bolts (3), wherein a slide (5) is arranged, below the flexible element (4) for setting the width of the die, laterally on the die in each case, wherein lateral adjusting bolts (3) press the flexible element (4) permanently onto the slides (5),
wherein, during extrusion, the thickness of the structural part is varied in the longitudinal direction and/or in the transverse direction by the die control unit, wherein the distance between the flexible element (4) and the die bottom part (1) is varied by the die control unit two-dimensionally, to be precise as a function of the position in the transverse direction and of time, wherein, to produce the structural part, the distance between the flexible element (4) and the die bottom part (1) is varied by the die control unit according to a first two-dimensional function, and, to produce a further structural part, the distance between the flexible element (4) and the die bottom part (1) is varied by the die control unit according to a second two-dimensional function different from the first two-dimensional functions, wherein the structural part and the further structural part are welded at their circumferences, in order jointly to form a container.

2. Method according to Claim 1,
**characterized in that** the first two-dimensional function and the second two-dimensional function are linked to one another in such a way that the circumferences of the two structural parts fit one on the other.

3. Method according to at least one of Claims 1 and 2,
**characterized in that**, before the production of the structural part and of the further structural part, a link between the first two-dimensional function and the second two-dimensional function is configured on the die control unit.

4. Method according to at least one of Claims 1 and 3,
**characterized in that**, after the extrusion of the structural part, the latter is thermoformed, in particular the regions of the structural part which are thicker after extrusion being thinned to a greater extent during thermoforming.

5. Method according to Claim 1,
**characterized in that** the distance between the flexible element (4) and the die bottom part (1) can be adjusted during extrusion by the die control unit by the amount of at least 0.5 mm, preferably of at least 1 mm, especially preferably of at least 2 mm.

## Revendications

1. Procédé de fabrication d'un composant en un matériau durcissable au moyen d'une buse pour l'extrusion de plaques ou de feuilles d'un matériau durcissable, comprenant une partie inférieure de buse (1) et une partie supérieure de buse (2) ainsi que plusieurs boulons de réglage (3) et une unité de commande de buse, dans laquelle un élément flexible (4) s'étend le long du bord inférieur de la partie supérieure de buse (2), dans laquelle la distance de l'élément flexible (4) à la partie inférieure de buse (1) est réglable pendant l'extrusion en plusieurs segments par les multiples boulons de réglage (3) de l'unité de commande de buse, dans laquelle un tiroir (5) est respectivement agencé latéralement sur la buse, en dessous de l'élément flexible (4), pour le réglage de la largeur de la buse, dans laquelle des boulons de réglage latéraux (3) pressent l'élément flexible (4) en permanence sur les tiroirs (5),
dans laquelle l'on fait varier l'épaisseur du composant en direction longitudinale et/ou en direction transversale pendant l'extrusion au moyen de l'unité de commande de buse, dans laquelle l'on fait varier, au moyen de l'unité de commande de buse, la distance de l'élément flexible (4) à la partie inférieure de buse (1) d'une manière bidimensionnelle, notamment en fonction de la position en direction transversale et du temps, dans laquelle l'on fait varier, au moyen de l'unité de commande de buse pour la fabrication du composant, la distance de l'élément flexible (4) à la partie inférieure de buse (1) selon une première fonction bidimensionnelle et on fait varier, au moyen de l'unité de commande de buse pour la fabrication d'un autre composant, la distance de l'élément flexible (4) à la partie inférieure de buse (1) selon une deuxième fonction bidimensionnelle différente de la première fonction bidimensionnelle, dans laquelle l'on soude le composant et l'autre composant le long de leurs pourtours, afin de former ensemble un récipient.

2. Procédé selon la revendication 1, **caractérisé en ce que** la première fonction bidimensionnelle et la deuxième fonction bidimensionnelle sont liées l'une à l'autre, de telle manière que les pourtours des deux composants s'adaptent l'un à l'autre.

3. Procédé selon au moins une des revendications 1 à 2, **caractérisé en ce que**, avant la fabrication du composant et de l'autre composant, on configure un lien entre la première fonction bidimensionnelle et la deuxième fonction bidimensionnelle à l'unité de commande de buse.

4. Procédé selon au moins une des revendications 1 à 3, **caractérisé en ce qu'**après l'extrusion du composant, celui-ci est thermoformé, dans lequel les zones plus épaisses du composant après l'extrusion sont fortement amincies lors du thermoformage.

5. Procédé selon la revendication 1, **caractérisé en ce que** la distance entre l'élément flexible (4) et la partie inférieure de buse (1) est réglable par l'unité de commande de buse pendant l'extrusion d'au moins 0,5 mm, de préférence d'au moins 1 mm, et de préférence encore d'au moins 2 mm.
